# EUROPÄISCHE PATENTSCHRIFT

(11) **EP 4 638 518 B1**
(45) Veröffentlichungstag und Bekanntmachung des Hinweises auf die Patenterteilung: **02.12.2026**
(21) Anmeldenummer: 23828742.9
(22) Anmeldetag: 14.12.2023
(51) Int. Cl.: C08F 8/02, C08F 8/30

(54) **VERFAHREN ZUR HERSTELLUNG VON AMIDOMETHYLIERTEN, VINYLAROMATISCHEN POLYMERISATEN**
METHOD FOR PRODUCING AMIDOMETHYLATED VINYL AROMATIC POLYMERS
PROCÉDÉ DE PRÉPARATION DE POLYMÈRES VINYLAROMATIQUES AMIDOMÉTHYLÉS

(30) Priorität: 21.12.2022 EP 22215280
(43) Veröffentlichungstag der Anmeldung: 29.10.2025
(73) Patentinhaber: LANXESS Deutschland GmbH, 50569 Köln (DE)
(72) Erfinder: KOOP, Bernd, 50668 Köln (DE)
(86) Internationale Anmeldenummer: PCT/EP2023/085755
(87) Internationale Veröffentlichungsnummer: WO 2024/132827

(56) Entgegenhaltungen:
- EP-A1- 1 155 728
- EP-A1- 2 835 384
- EP-A1- 3 478 727
- EP-B1- 3 581 595
- DE-A1- 19 954 393

## Beschreibung

Die Erfindung betrifft ein Verfahren zur Herstellung von amidomethylierten, vinylaromatischen Polymerisaten.

Die Herstellung von amidomethylierten, vinylaromatischen Polymerisaten ist seit langem bekannt. Aus der DE-A 2211134 ist bekannt, dass vernetzte Styrolperlpolymerisate mit N-Hydroxymethylphthalimid in Gegenwart von Quellungsmitteln und Friedel-Crafts Katalysatoren kondensiert werden können. Nachteilig an diesem Verfahren ist, dass zunächst das N-Hydroxymethylphthalimid aus Phthalimid hergestellt werden muss, dass Wasser während der Reaktion abdestilliert werden muss, die Halogenwasserstoffsäure zugegeben werden muss und dass die Ausbeute der amidomethylierten, vinylaromatischen Polymerisate nicht zufriedenstellend ist.

Ein weiteres Verfahren zur Herstellung von amidomethylierten, vinylaromatischen Polymerisaten, bei dem in einem Schritt Phthalimid, Paraformaldehyd, Schwefelsäure in Gegenwart von 1,2-Dichlorethan als Quellungsmittel und dem vinylaromatischen Perlpolymerisaten umgesetzt werden, ist aus der US-A 4232125 bekannt. Unterschiedliche Quellungsmittel als Alternativen für 1,2-Dichlorethan werden dort genannt. Nachteilig an diesem Verfahren ist ebenfalls, dass die Ausbeute der amidomethylierten, vinylaromatischen Polymerisaten nicht zufriedenstellend ist.

Ein weiteres Einschrittverfahren zur Herstellung von amidomethylierten, vinylaromatischen Polymerisaten, bei dem als Quellungsmittel 1,3-Dichlorpropan zum Einsatz kommt, ist aus der EP-A 3012272 bekannt. Dieses Quellungsmittel lässt sich technisch nur aufwendig von dem Produkt abtrennen und der Einsatz ist daher relativ teuer. Zudem steht 1,3-Dichlorpropan in dem Verdacht krebserregend zu sein und kommt daher als Quellungsmittel nicht in Frage.

Aus der EP-B 3478727 ist ein Amidomethylierungsverfahren in Gegenwart von Benzotrifluorid bekannt. Bei diesem Verfahren hat sich herausgestellt, dass Flusssäure gebildet wird, die zur Korrosion der Reaktoren führt und daher dieses Verfahren ebenfalls nicht eingesetzt werden kann.

Die EP-B 3581595 offenbart ein Verfahren bei dem die Amidomethylierung in Gegenwart von Bromalkylderivaten durchgeführt wird. Es steht aber derzeit zur Diskussion, inwieweit auch diese Verbindungen toxische Eigenschaften aufweisen, die ihren Einsatz beschränken könnten.

Es bestand daher weiterhin das Bedürfnis nach einem Verfahren, das die Nachteile des Standes der Technik überwindet und mit dem amidomethylierte, vinylaromatische Polymerisate in guten Ausbeuten hergestellt werden können.

Es wurde nun überraschend gefunden, dass die Umsetzung vinylaromatischer Polymerisate mit kondensierten Formaldehyden und Protonensäuren in Gegenwart von C₁-C₅-Difluoralkanen zu amidomethylierten, vinylaromatischen Polymerisaten unter hohen Ausbeuten abläuft.

Gegenstand der vorliegenden Erfindung ist daher ein Verfahren zur Herstellung amidomethylierter, vinylaromatischer Polymerisate bei dem mindestens ein vinylaromatisches Polymerisat mit mindestens einer Verbindung der Formel (I) oder deren Salze 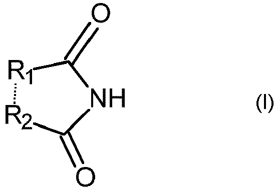 wobei R₁ = -C(H(C₁-C₆-Alkyl))- oder -CH₂- und R₂ = -C(H(C₁-C₆-Alkyl))- oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH=,
und mindestens ein kondensiertes Formaldehyd in Gegenwart mindestens einer Protonensäure und in Gegenwart mindestens eines geradkettigen oder verzweigten C₁-C₅-Difluoralkans oder mindestens eines zyklischen C₅-Difluoralkans oder Gemischen dieser Verbindungen, umgesetzt wird.

R₁ und R₂ stellen bevorzugt gemeinsam einen durch C₁-C₆-Alkyl substituierten aromatischen C₆-Ring dar. Besonders bevorzugt stellen R₁ und R₂ einen Benzolring dar, welcher gegebenenfalls durch C₁-C₄-Alkyl substituiert ist. Ganz besonders bevorzugt stellen Verbindungen der Formel (I) Phthalimid, Succinimid oder Maleinimid dar. Noch weiter bevorzugt ist die Verbindung der Formel (I) Phthalimid. Bei Verwendung von Phthalimid werden erfindungsgemäß phthalimidomethylierte Polymerisate hergestellt. Als Salze der Verbindungen der Formel (I) werden vorzugsweise Additionsprodukte anorganischer oder organischer Laugen mit Verbindungen der Formel (I), wie, vorzugsweise Ammoniumsalze und Alkali- oder Erdalkalimetallsalze verstanden. Falls Salze eingesetzt werden, werden besonders bevorzugt die Natrium- und Kaliumsalze der Verbindungen der Formel (I) eingesetzt.

C₁-C₆-Alkyl bzw. C₁-C₄-Alkyl stehen im Rahmen der Erfindung für einen geradkettigen oder verzweigten oder zyklischen Alkylrest mit 1 bis 6 bzw. mit 1 bis 4 Kohlenstoffatomen. Beispielhaft und vorzugsweise steht C₁-C₆-Alkyl für Methyl, Ethyl, n-Propyl, Isopropyl, n-, i-, s- oder t-Butyl, Cyclopropyl, n-Propyl, 1-Methylbutyl.

Beispielhaft und vorzugsweise steht C₁-C₄-Alkyl für Methyl, Ethyl, n-Propyl und Isopropyl.

C₁-C₅-Difluoralkan steht vorzugsweise für ein C₁-C₃-Difluoralkan. C₁-C₅-Difluoralkan steht beispielsweise und vorzugsweise für Difluormethan, 1,1-Difluorethan, 1,2-Difluorethan, 1,1-Difluorpropan, 1,2-Difluorpropan, 1,3-Difluorpropan, 1,1-Difluorbutan, 1,2-Difluorbutan, 1,3-Difluorbutan, 1,4-Difluorbutan, 2,3-Difluorbutan, 1,3-Difluor-2-methylpropan, 1,1-Difluropentan, 1,2-Difluorpentan, 1,3-Difluorpentan, 1,4-Difluorpentan, 1,5-Difluorpentan, 2,3-Difluorpentan, 2,4-Difluorpentan und 1,5-Difluorpentan oder Gemischen dieser Verbindungen. Zyklische C₅-Difluoralkane stehen bevorzugt für 1,1-Difluorcyclopentan und 1,2-Difluorcyclopentan. Besonders bevorzugt steht C₁-C₅-Difluoralkan für Difluormethan, Difluorethan und Difluorpropan. Ganz besonders bevorzugt stehen C₁-C₅-Difluoralkan und C₁-C₃-Difluoralkan für Difluormethan und 1,3-Difluorpropan.

C₁-C₅-Difluoralkane und zyklische C₅-Difluoralkane stellen Quellungsmittel für die Polymerisate dar, dienen aber ebenfalls als Lösungsmittel für die weiteren Edukte der Amidomethylierungsreaktion. Bei der Amidomethylierungsreaktion können auch weitere organische Quellungsmittel zugesetzt werden. Als weitere organische Quellungsmittel können z.B. und vorzugsweise Benzotrifluorid, Dibrommethan, 1,2-Dichlorethan, 1,2-Dichlorpropan, 1,3-Dichlorpropan, 1,4-Dichlorbutan, 1,6-Dichlorhexan, Methylenchlorid, Tetrachlorkohlenstoff, Trichlorethan, Chlorbenzol, 1,2-Dichlorbenzol, oder Nitrosubstituierte Kohlenwasserstoffe, wie z.B. Nitropropan, Nitrobenzol oder z.B. cyclische Kohlenwasserstoffe, wie z.B. Cyclohexan und Methylcyclohexan zugesetzt werden. Bevorzugt werden keine weiteren Quellungsmittel oder/und Lösungsmittel eingesetzt.

Bevorzugt ist die Gewichtsmenge von C₁-C₅-Difluoralkan und/oder zyklischen C₅-Difluoralkanen an eingesetzten Quellungsmitteln 80 Gew.-% bis 100 Gew.-%. Besonders bevorzugt ist die Gewichtsmenge von C₁-C₅-Difluoralkan und/oder zyklischen C₅-Difluoralkanen an eingesetzten Quellungsmitteln 90 Gew.-% bis 100 Gew.-%. Ganz besonders bevorzugt ist die Gewichtsmenge von C₁-C₅-Difluoralkanen und/oder zyklischen C₅-Difluoralkanen an eingesetzten Quellungsmitteln 98 Gew.-% bis 100 Gew.-%.

Unter kondensiertem Formaldehyd werden Kondensate des Formaldehyds verstanden. Die Herstellung solcher Verbindungen erfolgt nach üblichen dem Fachmann bekannten Verfahren. Als kondensierte Formaldehyde werden beispielsweise und vorzugsweise Verbindungen der Formel (II) eingesetzt 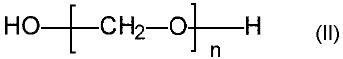 bei denen n = 8 bis 100 beträgt. Bevorzugt werden Verbindungen der Formel (II) eingesetzt, bei denen n = 8 bis 30 ist.

Es können aber auch zyklische Kondensate wie z.B. Trioxan eingesetzt werden. Besonders bevorzugt werden als kondensiertes Formaldehyd Paraformaldehyd oder Trioxan oder Gemische dieser Verbindungen eingesetzt. Ganz besonders bevorzugt wird als kondensiertes Formaldehyd Paraformaldehyd eingesetzt.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure, aliphatische oder aromatische Methan-, Benzol,- oder Toluolsulfonsäuren oder Phosphorsäure eingesetzt. Als organische Protonensäuren können z.B. Oxalsäure, Essigsäure oder Ameisensäure eingesetzt werden. Bevorzugt werden anorganische Protonensäuren eingesetzt. Besonders bevorzugt werden als Protonensäuren Schwefelsäure oder Oleum eingesetzt.

Die erfindungsgemäßen Polymerisate sind vorzugsweise kugelförmig. Die Polymerisate haben vorzugsweise einen Durchmesser von 200 bis 1000 µm. Kugelförmige Polymerisate werden als Perlpolymerisate bezeichnet.

Der Begriff vinylaromatisch im Sinne der Erfindung umfasst polyvinylaromatische und monovinylaromatische Monomere. Zur Herstellung der vinylaromatischen Polymerisate wird beispielsweise mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen. Bevorzugt werden zur Herstellung der vinylaromatischen Polymerisate mindestens eine monovinylaromatische Verbindung und mindestens eine polyvinylaromatische Verbindung eingesetzt.

Als monovinylaromatische Verbindungen im Sinne der vorliegenden Erfindung werden bevorzugt Styrol, Vinyltoluol, Ethylstyrol, α-Methylstyrol, Chlorstyrol und Chlormethylstyrol, eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind Divinylbenzol, Divinyltoluol, Trivinylbenzol, Triallyisocyanurat, Divinylnaphthalin oder Trivinylnaphthalin.

Die polyvinylaromatischen Verbindungen werden vorzugsweise in Mengen von 1-20 Gew.-%, besonders bevorzugt in Mengen von 2-12 Gew.-%, ganz besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Polymerisates ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform sind die vinylaromatischen Polymerisate Styrol-Divinylbenzol vernetzte Copolymerisate.

In einer bevorzugten Ausführungsform der vorliegenden Erfindung kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise und vorzugsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten, in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind vorzugsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril). Ganz besonders bevorzugt wird Dibenzoylperoxid eingesetzt.

Die Initiatoren werden vorzugsweise in Mengen von 0,05 bis 2,5 Gew.-%, besonders bevorzugt in Mengen von 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im Polymerisat eine makroporöse Struktur zu erzeugen. Hierfür sind organische Lösungsmittel geeignet, die das entstandene Polymerisat schlecht lösen bzw. quellen. Vorzugsweise seien Hexan, Octan, Isooctan, Isododecan, Methylethylketon, Butanol oder Octanol und deren Isomeren genannt. Besonders bevorzugt wird Isododecan als Porogen eingesetzt. Bevorzugt werden Porogene bei der Herstellung der erfindungsgemäßen amidomethylierten, vinylaromatischen Polymerisate eingesetzt.

Die Begriffe mikroporös oder gelförmig bzw. makroporös sind in der Fachliteratur bereits eingehend beschrieben worden.

Bevorzugte Polymerisate im Sinne der vorliegenden Erfindung weisen eine makroporöse Struktur auf.

Makroporös im Sinne der Erfindung bedeutet vorzugsweise, dass der mittlere Durchmesser der Poren im Polymerisat ≥ 25 nm sind. Besonders bevorzugt weisen die Poren im Polymerisat der makroporösen Polymerisate einen mittleren Durchmesser von 30 nm bis 1000 nm auf. Ganz besonders bevorzugt weisen die Poren im Polymerisat der makroporösen Polymerisate einen mittleren Durchmesser von 30 nm bis 100 nm auf.

Gelförmig im Sinne der Erfindung bedeutet, dass die BET-Oberfläche ≤ 2 m²/g ist. Vorzugsweise ist die BET-Oberfläche bei gelförmigen Polymerisaten 0,02 m²/g bis 2 m²/g.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Polymerisate können in heterodisperser oder monodisperser Form hergestellt werden. Die Herstellung heterodisperser Polymerisate geschieht nach allgemeinen, dem Fachmann bekannten Verfahren, z.B. mit Hilfe der Suspensionspolymerisation.

Bevorzugt werden monodisperse, vinylaromatische Polymerisate im erfindungsgemäßen Verfahren hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10% des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Das monodisperse Polymerisat kann nach den aus der Literatur bekannten Verfahren hergestellt werden. Bei der Herstellung von monodispersen, vinylaromatischen Polymerisaten kann die wässrige Phase gegebenenfalls einen gelösten Polymerisationsinhibitor enthalten. Bevorzugt enthält die wässrige Phase einen gelösten Polymerisationsinhibitor. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitro-sophenylhydroxylamin-Ammoniumsalz oder N-Nitrosophenylhydroxylamin-Aluminiumsalz. Die Konzentration des Inhibitors beträgt vorzugsweise 5 - 1000 ppm bezogen auf die wässrige Phase, besonders bevorzugt 10 - 500 ppm und noch weiter bevorzugt 10 - 250 ppm. Bevorzugt wird Resorcin als Polymerisationsinhibitor eingesetzt. Bevorzugt wird ein Polymerisationsinhibitor eingesetzt.

Die Polymerisation der gegebenenfalls mikroverkapselten Monomertröpfchen zum monodispersen, vinylaromatischen Polymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine und wird bevorzugt eingesetzt. Die Einsatzmenge der Schutzkolloide beträgt vorzugsweise 0,05 bis 1 Gew.-% bezogen auf die wässrige Phase, besonders bevorzugt 0,05 bis 0,5 Gew. %.

Die Polymerisation zum monodispersen, vinylaromatischen Polymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise von 12 bis 8, einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt vorzugsweise 0,5 - 500 mmol/I, besonders bevorzugt 2,5 - 100 mmol/I.

Die Rührgeschwindigkeit bei der Polymerisation ist weniger kritisch und hat keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt vorzugsweise 1 : 0,75 bis 1 : 20, besonders bevorzugt 1 : 1 bis 1 : 6.

Die Polymerisationstemperatur richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, vorzugsweise durch Filtrieren oder Dekantieren, isoliert und gegebenenfalls gewaschen.

Das vinylaromatische Polymerisat wird mit mindestens einer Verbindung der Formel (I), mindestens einem kondensierten Formaldehyd in Gegenwart von C₁-C₅-Difluoralkan oder zyklischen C₅-Difluoralkanen oder Gemischen dieser Verbindungen und in Gegenwart mindestens einer Protonensäure zum amidomethylierten, vinylaromatischen Polymerisat umgesetzt.

Das vinylaromatische Polymerisat kann beispielsweise zunächst in Gegenwart eines C₁-C₅-Difluoralkans und/oder zyklischen C₅-Difluoralkans aufgequollen werden und in diesem Zustand mit einer Mischung aus den Verbindungen der Formel (I), dem kondensiertem Formaldehyd und den Protonensäuren vermischt werden. Genauso könnte aber zunächst die Verbindungen der Formel (I) zu dem vernetzten Polymerisat in Gegenwart eines C₁-C₅-Difluoralkans und/oder zyklischen C₅-Difluoralkans hinzugegeben werden und danach das kondensierte Formaldehyd und dann die Protonensäuren hinzugefügt werden. Oder man legt zunächst die Verbindungen der Formeln (I), das kondensierte Formaldehyd, das C₁-C₅-Difluoralkan und/oder zyklische C₅-Difluoralkan vor, fügt die Protonensäure dazu und gibt dann das vinylaromatische Polymerisat hinzu. Bevorzugt wird zunächst das vernetzte Polymerisat in Gegenwart des C₁-C₅-Difluoralkans und/oder des zyklischen C₅-Difluoralkans aufgequollen und dann die Verbindungen der Formel (I) oder das kondensierte Formaldehyd hinzugegeben und dann die Protonensäure hinzugefügt. Die Abtrennung des C₁-C₅-Difluoralkans und/oder des zyklischen C₅-Difluoralkans erfolgt vorzugsweise destillativ oder durch Verringerung des Druckes. Die Aufarbeitung der Reaktionsprodukte erfolgt nach dem Fachmann bekannten Verfahren. Bevorzugt wird die Reaktionsmischung erwärmt. Bevorzugt verläuft die Reaktion in einer Eintopfreaktion.

Vorzugsweise beträgt das Gewichtsverhältnis des C₁-C₅-Difluoralkans und/oder zyklischen C₅-Difluoralkans zu dem vinylaromatischen Polymerisat 15:1 bis 3:1. Besonders bevorzugt beträgt das Gewichtsverhältnis des C₁-C₅-Difluoralkans und/oder zyklischen C₅-Difluoralkans zu dem vinylaromatischen Polymerisat 10:1 bis 4:1.

Das Stoffmengenverhältnis der aromatischen Gruppen im vinylaromatischen Polymerisat zu den Verbindungen der Formel (I) beträgt vorzugsweise 0,2:1 bis 2,5:1. Besonders bevorzugt beträgt das Stoffmengenverhältnis der aromatischen Gruppen im vinylaromatischen Polymerisat zu den Verbindungen der Formel (I) 0,5:1 bis 1,8:1.

Das Stoffmengenverhältnis von Verbindungen der Formel (I) zu kondensiertem Formaldehyd beträgt vorzugsweise 0,7:1 bis 1,3:1. Besonders bevorzugt beträgt das Stoffmengenverhältnis von Verbindungen der Formel (I) zu kondensiertem Formaldehyd 0,95:1 bis 1,1:1.

Das Stoffmengenverhältnis der Verbindungen der Formel (I) zu der eingesetzten Protonensäure beträgt vorzugsweise zwischen 10:1 bis 1:10. Besonders bevorzugt beträgt das Stoffmengenverhältnis der Verbindungen der Formel (I) zu der eingesetzten Protonensäure 1:1 bis 1:10.

Falls als Protonensäure Schwefelsäure eingesetzt wird, dann beträgt die Konzentration der eingesetzten Schwefelsäure vorzugsweise 70 Gew.-% bis 100 Gew.-%. Noch weiter bevorzugt beträgt die Konzentration der eingesetzten Schwefelsäure 90 Gew.-% bis 100 Gew.-%.

Die Reaktionstemperatur für die Umsetzung der vinylaromatischen Polymerisate zu den amidomethylierten, vinylaromatischen Polymerisaten beträgt vorzugsweise 0°C und 130 °C. Die Reaktion wird vorzugsweise bei einem Druck und einer Temperatur durchgeführt, bei der die Lösungsmittel flüssig sind. Bevorzugt beträgt der Druck 1 bis 60 bar. Die Reaktionstemperatur beträgt bevorzugt 30 °C bis 90 °C.

Die amidomethylierten, vinylaromatischen Polymerisate sind insbesondere bedeutsame Zwischenprodukte für die Herstellung von Ionenaustauschern und Chelatharzen. So lassen sich beispielsweise aus den, nach dem erfindungsgemäßen Verfahren hergestellten amidomethylierten, vinylaromatischen Polymerisaten, Ionenaustauscher, insbesondere Anionenaustauscher, und Chelatharze herstellen.

Das amidomethylierte, vinylaromatische Polymerisat kann in einem weiteren Schritt zu aminomethylierten, vinylaromatischen Polymerisaten umgesetzt werden. Bevorzugt wird das amidomethylierte, vinylaromatische Polymerisat weiter zu aminomethylierten, vinylaromatischen Polymerisaten umgesetzt. Vorzugsweise erfolgt die Umsetzung durch Behandeln des amidomethylierten, vinylaromatischen Polymerisates mit wässrigen oder alkoholischen Lösungen eines Alkalihydroxids, wie Natriumhydroxid oder Kaliumhydroxid bei Temperaturen zwischen 100°C und 250°C, vorzugsweise bei Temperaturen zwischen 120°C und 190°C. Bevorzugt erfolgt die Umsetzung mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%.

Das dabei entstehende aminomethylierte, vinylaromatische Polymerisat kann mit vollentsalztem Wasser alkalifrei gewaschen werden.

Das aminomethylierte, vinylaromatische Polymerisat kann mit weiteren Alkylierungsmitteln zu Anionenaustauschern oder Chelatharzen umgesetzt werden oder auch als Ionenaustauscher verwendet werden.

Weiterhin ist möglich, die erfindungsgemäßen aminomethylierten, vinylaromatischen Polymerisate mit Halomethylstickstoffheterocyclen, wie z.B. 2-Chlormethylpyridin, 3-Chlormethylpyridin oder 4-Chlormethylpyridin umzusetzen und dadurch Chelatharze herzustellen.

Mit der vorliegenden Erfindung wird ein neues Herstellungsverfahren für amidomethylierte, vinylaromatische Polymerisate zur Verfügung gestellt, mit der diese, insbesondere phthalimidomethylierte Polymerisate und aminomethylierte Polymerisate, unter Berücksichtigung ökologischer Gesichtspunkte und in hoher Ausbeute, hergestellt werden können.

### Beispiel 1

### 1.1 Herstellung des monodispersen, makroporösen Polymerisates auf der Basis von Styrol, Divinylbenzol und Ethylstyrol

In einem 10 I Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,4 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet.

Man erhält 1893 g eines Polymerisates mit enger Teilchengrößenverteilung. Der mittlere Durchmesser der Poren im Polymer beträgt 42 nm.

### 1.2. Herstellung eines phthalimidomethylierten, monodispersen, makroporösen Polymerisates mit dem Quellungsmittel 1,3-Difluorpropan

In einem Rundkolben werden 29,5 g 1,3-Difluorpropan vorgelegt. Dazu gibt man 4,1 g Polymerisat aus Beispiel 1.1, 5,9 g (0,04 mol) Phthalimid und 1,2 g (0,04 mol) Paraformaldehyd (n = 8 bis 30) (96 Gew.-%) und lässt anschließend 30 min bei Raumtemperatur rühren. Innerhalb von 30 min werden 14,6 g (0,14 mol) Schwefelsäure (96 Gew.-%) zugetropft und anschließend wird 24 h bei 40°C gerührt. Danach werden die Perlen auf einem Sieb abgetrennt und mit Wasser, Aceton und Wasser gewaschen.
Volumenausbeute: 23 ml
Stickstoffgehalt (nach Trocknung): 5,1 Gew.%

Unter Ausbeute verstehen wir im Rahmen der Erfindung den Funktionalisierungsgrad des Polymers, der durch den Stickstoffgehalt repräsentiert wird. Dieser ist im erfindungsgemäßen Beispiel größer als im Vergleichsbeispiel.

### Beispiel 2

### Vergleichsbeispiel (nicht erfindungsgemäß)

### 2.1 Herstellung eines phthalimidomethylierten, monodispersen, makroporösen Polymerisates mit dem Quellungsmittel 1,2-Dichlorethan

In einem Rundkolben werden 29,7 g 1,2-Dichlorethan vorgelegt. Dazu gibt man 4,1 g Polymerisat aus Beispiel 1.1, 5,9 g Phthalimid (0,04 mol) und 1,2 g (0,04 mol) Paraformaldehyd (n = 8 bis 30) (96 Gew.-%) und lässt anschließend 30 min bei Raumtemperatur rühren. Innerhalb von 30 min werden 14,6 g (0,14 mol) Schwefelsäure (96 Gew.-%) zugetropft und anschließend wird 24 h bei 40°C gerührt. Danach werden die Perlen auf einem Sieb abgetrennt und mit Wasser, Aceton und Wasser gewaschen.
Volumenausbeute: 25 ml
Stickstoffgehalt (nach Trocknung): 4,9 Gew.%

## Patentansprüche

1. Verfahren zur Herstellung von amidomethylierten, vinylaromatischen Polymerisaten, **dadurch gekennzeichnet, dass** mindestens ein vinylaromatisches Polymerisat mit mindestens einer Verbindung der Formel (I) oder deren Salze 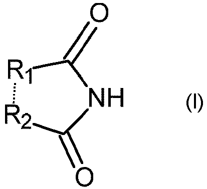
wobei R₁ = -C(H(C₁-C₆-Alkyl))- oder -CH₂- und R₂ = -C(H(C₁-C₆-Alkyl))- oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH=, und
mindestens ein kondensiertes Formaldehyd
in Gegenwart mindestens einer Protonensäure und
in Gegenwart mindestens eines geradkettigen oder verzweigten C₁-C₅-Difluoralkans oder mindestens eines zyklischen C₅-Difluoralkans oder Gemischen dieser Verbindungen, umgesetzt wird..

2. Verfahren gemäß Anspruch 1, **dadurch gekennzeichnet, dass** die C₁-C₅-Difluoralkane ausgewählt sind aus der Gruppe Difluormethan, 1,1-Difluorethan, 1,2-Difluorethan, 1,1-Difluorpropan, 1,2-Difluorpropan, 1,3-Difluorpropan, 1,1-Difluorbutan, 1,2-Difluorbutan, 1,3-Difluorbutan, 1,4-Difluorbutan, 2,3-Difluorbutan, 1,3-Difluor-2-methylpropan, 1,1-Difluropentan, 1,2-Difluorpentan, 1,3-Difluorpentan, 1,4-Difluorpentan, 1,5-Difluorpentan, 2,3-Difluorpentan, 2,4-Difluorpentan und 1,5-Difluorpentan oder Gemischen dieser Verbindungen.

3. Verfahren gemäß einem der Ansprüche 1 oder 2, **dadurch gekennzeichnet, dass** als C₁-C₅-Difluoralkane Difluormethan oder 1,3-Difluorpropan eingesetzt werden.

4. Verfahren gemäß einem oder mehreren der Ansprüche 1 bis 3, **dadurch gekennzeichnet, dass** als zyklische C₅-Difluoralkane 1,1-Difluorcyclopentan und 1,2-Difluorcyclopentan eingesetzt werden.

5. Verfahren gemäß einem oder mehreren der Ansprüche 1 bis 4, **dadurch gekennzeichnet, dass** als kondensierte Formaldehyde Paraformaldehyd oder Trioxan oder Gemische aus diesen Verbindungen eingesetzt werden.

6. Verfahren gemäß einem oder mehreren der Ansprüche 1 bis 5, **dadurch gekennzeichnet, dass** als vinylaromatisches Perlpolymerisat ein Styrol-Divinylbenzol-Copolymerisat eingesetzt wird.

7. Verfahren gemäß einem oder mehreren der Ansprüche 1 bis 6, **dadurch gekennzeichnet, dass** als Verbindung der Formel (I) Phthalimid oder dessen Salze eingesetzt wird.

8. Verfahren gemäß einem oder mehreren der Ansprüche 1 bis 7, **dadurch gekennzeichnet, dass** als vinylaromatisches Polymerisat ein monodisperses, vinylaromatisches Polymerisat eingesetzt wird.

9. Verfahren gemäß einem oder mehreren der Ansprüche 1 bis 8, **dadurch gekennzeichnet, dass** die Poren des eingesetzten vinylaromatischen Polymerisats einen Durchmesser von ≥ 25 nm aufweisen.

10. Verfahren gemäß einem oder mehreren der Ansprüche 1 bis 9, **dadurch gekennzeichnet, dass** das Gewichtsverhältnis von C₁-C₅-Difluoralkan zu dem vinylaromatischen Polymerisat 10:1 bis 4:1 beträgt.

11. Verfahren gemäß einem oder mehreren der Ansprüche 1 bis 10, **dadurch gekennzeichnet, dass** das Stoffmengenverhältnis der aromatischen Gruppen im vinylaromatischen Perlpolymerisat zu den Verbindungen der Formel (I) 0,5:1 bis 1,8:1 beträgt.

12. Verfahren gemäß einem oder mehreren der Ansprüche 1 bis 11, **dadurch gekennzeichnet, dass** das Stoffmengenverhältnis von Verbindungen der Formel (I) zu kondensiertem Formaldehyd 0,95:1 bis 1,1:1 beträgt.

13. Verfahren gemäß einem oder mehreren der Ansprüche 1 bis 12, **dadurch gekennzeichnet, dass** das Stoffmengenverhältnis der Verbindungen der Formel (I) zu der eingesetzten Protonensäure zwischen 10:1 bis 1:10 liegt.

14. Verfahren gemäß einem oder mehreren der Ansprüche 1 bis 13, **dadurch gekennzeichnet, dass** die Reaktionstemperatur für die Umsetzung der vinylaromatischen Polymerisate zu den amidomethylierten, vinylaromatischen Polymerisaten zwischen 30 °C und 90 °C liegt.

## Claims

1. Process for preparing amidomethylated vinylaromatic polymers, **characterized in that** at least one vinylaromatic polymer is reacted with at least one compound of formula (I) or salts thereof 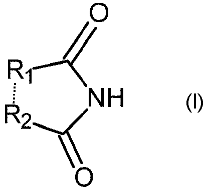
where R₁ = -C(H(C₁-C₆-alkyl))- or -CH₂- and R₂ = -C(H(C₁-C₆-alkyl))- or -CH₂- or R₁ and R₂ are two carbon atoms of an aromatic C₆ ring optionally substituted by one or two C₁-C₆-alkyl radicals, or R₁ and R₂ are each -CH=, and
at least one condensed formaldehyde
in the presence of at least one protic acid and
in the presence of at least one straight-chain or branched C₁-C₅ difluoroalkane or of at least one cyclic C₅ difluoroalkane or mixtures of these compounds.

2. Process according to Claim 1, **characterized in that** the C₁-C₅ difluoroalkanes are selected from the group of difluoromethane, 1,1-difluoroethane, 1,2-difluoroethane, 1,1-difluoropropane, 1,2-difluoropropane, 1,3-difluoropropane, 1,1-difluorobutane, 1,2-difluorobutane, 1,3-difluorobutane, 1,4-difluorobutane, 2,3-difluorobutane, 1,3-difluoro-2-methylpropane, 1,1-difluoropentane, 1,2-difluoropentane, 1,3-difluoropentane, 1,4-difluoropentane, 1,5-difluoropentane, 2,3-difluoropentane, 2,4-difluoropentane and 1,5-difluoropentane or mixtures of these compounds.

3. Process according to either of Claims 1 and 2, **characterized in that** the C₁-C₅ difluoroalkanes used are difluoromethane or 1,3-difluoropropane.

4. Process according to one or more of Claims 1 to 3, **characterized in that** the cyclic C₅ difluoroalkanes used are 1,1-difluorocyclopentane and 1,2-difluorocyclopentane.

5. Process according to one or more of Claims 1 to 4, **characterized in that** the condensed formaldehydes used are paraformaldehyde or trioxane or mixtures of these compounds.

6. Process according to one or more of Claims 1 to 5, **characterized in that** the vinylaromatic bead polymer used is a styrene-divinylbenzene copolymer.

7. Process according to one or more of Claims 1 to 6, **characterized in that** the compound of formula (I) used is phthalimide or salts thereof.

8. Process according to one or more of Claims 1 to 7, **characterized in that** the vinylaromatic polymer used is a monodisperse vinylaromatic polymer.

9. Process according to one or more of Claims 1 to 8, **characterized in that** the pores of the vinylaromatic polymer used have a diameter of ≥ 25 nm.

10. Process according to one or more of Claims 1 to 9, **characterized in that** the weight ratio of C₁-C₅ difluoroalkane to the vinylaromatic polymer is 10:1 to 4:1.

11. Process according to one or more of Claims 1 to 10, **characterized in that** the molar ratio of the aromatic groups in the vinylaromatic bead polymer to the compounds of formula (I) is 0.5:1 to 1.8:1.

12. Process according to one or more of Claims 1 to 11, **characterized in that** the molar ratio of compounds of formula (I) to condensed formaldehyde is 0.95:1 to 1.1:1.

13. Process according to one or more of Claims 1 to 12, **characterized in that** the molar ratio of the compounds of formula (I) to the protic acid used is between 10:1 to 1:10.

14. Process according to one or more of Claims 1 to 13, **characterized in that** the reaction temperature for the conversion of the vinylaromatic polymers to the amidomethylated vinylaromatic polymers is between 30°C and 90°C.

## Revendications

1. Procédé de préparation de polymères aromatiques de vinyle amidométhylés, **caractérisé en ce qu'**on transforme au moins un polymère aromatique de vinyle avec au moins un composé de formule (I) ou ses sels 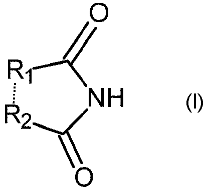
dans laquelle R₁ = -C(H(alkyle en C₁-C₆))- ou -CH₂- et R₂ = -C(H(alkyle en C₁-C₆)) - ou -CH₂- ; ou R₁ et R₂ représentent deux atomes de carbone d'un cycle aromatique en C₆ éventuellement substitué par un ou deux radicaux alkyle en C₁-C₆ ; ou R₁ et R₂ représentent chacun -CH= et au moins un formaldéhyde condensé
en présence d'au moins un acide protonique et
en présence d'au moins un difluoroalcane en C₁-C₅ linéaire ou ramifié ou d'au moins un difluoroalcane en C₅ cyclique ou de mélanges de ces composés.

2. Procédé selon la revendication 1, **caractérisé en ce que** les difluoroalcanes en C₁-C₅ sont choisis dans le groupe difluorométhane, 1,1-difluoroéthane, 1,2-difluoroéthane, 1,1-difluoropropane, 1,2-difluoropropane, 1,3-difluoropropane, 1,1-difluorobutane, 1,2-difluorobutane, 1,3-difluorobutane, 1,4-difluorobutane, 2,3-difluorobutane, 1,3-difluoro-2-méthylpropane, 1,1-difluropentane, 1,2-difluoropentane, 1,3-difluoropentane, 1,4-difluoropentane, 1,5-difluoropentane, 2,3-difluoropentane, 2,4-difluoropentane et 1,5-difluoropentane ou mélanges de ces composés.

3. Procédé selon l'une des revendications 1 ou 2, **caractérisé en ce qu'**on utilise, comme difluoroalcanes en C₁-C₅, du difluorométhane ou du 1,3-difluoropropane.

4. Procédé selon l'une ou plusieurs des revendications 1 à 3, **caractérisé en ce qu'**on utilise, comme difluoroalcanes en C₅ cycliques, du 1,1-difluorocyclopentane et du 1,2-difluorocyclopentane.

5. Procédé selon l'une ou plusieurs des revendications 1 à 4, **caractérisé en ce qu'**on utilise, comme formaldéhydes condensés, du paraformaldéhyde ou du trioxane ou des mélanges de ces composés.

6. Procédé selon l'une ou plusieurs des revendications 1 à 5, **caractérisé en ce qu'**on utilise, comme polymère aromatique de vinyle en perles, un copolymère de styrène-divinylbenzène.

7. Procédé selon l'une ou plusieurs des revendications 1 à 6, **caractérisé en ce qu'**on utilise, comme composé de formule (I), du phtalimide ou ses sels.

8. Procédé selon l'une ou plusieurs des revendications 1 à 7, **caractérisé en ce qu'**on utilise, comme polymère aromatique de vinyle, un polymère aromatique de vinyle monodispersé.

9. Procédé selon l'une ou plusieurs des revendications 1 à 8, **caractérisé en ce que** les pores du polymère aromatique de vinyle utilisé présentent un diamètre ≥ 25 nm.

10. Procédé selon l'une ou plusieurs des revendications 1 à 9, **caractérisé en ce que** le rapport en poids du difluoroalcane en C₁-C₅ au polymère aromatique de vinyle est de 10:1 à 4:1.

11. Procédé selon l'une ou plusieurs des revendications 1 à 10, **caractérisé en ce que** le rapport molaire des groupes aromatiques dans le polymère aromatique de vinyle en perles aux composés de formule (I) est de 0,5:1 à 1,8:1.

12. Procédé selon l'une ou plusieurs des revendications 1 à 11, **caractérisé en ce que** le rapport molaire des composés de formule (I) au formaldéhyde condensé est de 0,95:1 à 1,1:1.

13. Procédé selon l'une ou plusieurs des revendications 1 à 12, **caractérisé en ce que** le rapport molaire des composés de formule (I) à l'acide protonique utilisé est situé entre 10:1 et 1:10.

14. Procédé selon l'une ou plusieurs des revendications 1 à 13, **caractérisé en ce que** la température de réaction pour la transformation des polymères aromatiques de vinyle en polymères aromatiques de vinyle amidométhylés est situé entre 30°C et 90°C.
